# EUROPÄISCHE PATENTSCHRIFT

(11) **EP 3 251 764 B1**
(45) Veröffentlichungstag und Bekanntmachung des Hinweises auf die Patenterteilung: **03.07.2019**
(21) Anmeldenummer: 16172244.2
(22) Anmeldetag: 31.05.2016
(51) Int. Cl.: B21B 39/12, B21B 39/14, B21C 47/34

(54) **VERFAHREN UND VORRICHTUNG ZUR STABILISIERUNG EINER BEWEGUNG EINES GEWALZTEN METALLISCHEN BANDES AUF EINEM ROLLGANG**
METHOD AND DEVICE FOR STABILISING A MOVEMENT OF A ROLLED METAL STRIP ON A ROLLER CONVEYOR
PROCÉDÉ ET DISPOSITIF DE STABILISATION D'UN MOUVEMENT D'UNE BANDE MÉTALLIQUE LAMINÉE SUR UN TRAIN DE ROULEAUX

(43) Veröffentlichungstag der Anmeldung: 06.12.2017
(73) Patentinhaber: Primetals Technologies Austria GmbH, 4031 Linz (AT)
(72) Erfinder: Linzer, Bernd, 4621 Leombach (AT); Ostheimer, Pascal, 4020 Linz (AT); Schiefer, Juergen, 4511 Allhaming (AT); Zahedi, Michael, 4502 St. Marien (AT)
(74) Vertreter: Metals@Linz

(56) Entgegenhaltungen:
- JP-A- H07 323 321
- KR-A- 20120 032 855
- KR-A- 20120 044 180

## Beschreibung

### Gebiet der Technik

Die vorliegende Erfindung betrifft eine Vorrichtung und ein Verfahren zur Stabilisierung eines gewalzten metallischen Bandes, vorzugsweise eines Stahlbands, das auf einem Rollgang in einem Warmwalzwerk bewegt wird.

In einem Warmwalzwerk oder einer Gieß-Walz-Verbundanlage (engl. *Thin Slab Casting and Rolling TSCR*), insbesondere einer Arvedi-ESP Gieß-Walz-Verbundanlage, kann Warmband auf mehrere Arten produziert werden:
Im sogenannten Batch Betrieb wird eine Bramme in zumindest einer Walzstraße zu einem Fertigband gewalzt, das Fertigband in einer Kühlstrecke abgekühlt und anschließend mit einer Haspeleinrichtung zu Bunden (engl. *coils*) aufgehaspelt.

Im sogenannten Semi-Endlos (engl. *semi-endless*) Betrieb wird ein endloser Strang in einer ersten Walzstraße zu einem Zwischenband mit einer Dicke von ≥ 15 mm vorgewalzt, das Zwischenband mit einer Schere zerteilt, in einer zweiten Walzstraße zu einem Fertigband mit Enddicken von ≥ 3,5 mm fertiggewalzt, anschließend in einer Kühlstrecke abgekühlt und danach mit einer oder mehreren Haspeleinrichtungen zu Bunden aufgehaspelt. Die Geschwindigkeiten des fertigen Warmbands liegen dabei abhängig von der Enddicke bei max. 3 m/s. Bei diesem Verhältnis von minimaler Enddicke und maximaler Bandgeschwindigkeit können die Bandköpfe noch stabil über den Rollgang zur Haspeleinrichtung transportiert werden.

Im sogenannten Endlos (engl. *endless*) Betrieb wird ein endlos gegossener Strang in einer ersten und zweiten Walzstraße gewalzt, das Fertigband in einer Kühlstrecke abgekühlt und danach in einer Haspeleinrichtung zu Bunden aufgehaspelt. Das entstandene Warmband wird erst unmittelbar vor der Haspeleinrichtung mittels einer sogenannten fliegenden Schere in passende Längen zerteilt und auf den Haspeleinrichtungen alternierend zu Stahlbunden gewickelt. Bei diesem Verfahren werden Warmbänder mit Enddicken von 0,6 bis 6 mm produziert, die abhängig von der Enddicke eine max. Geschwindigkeit von 17 m/s aufweisen können.

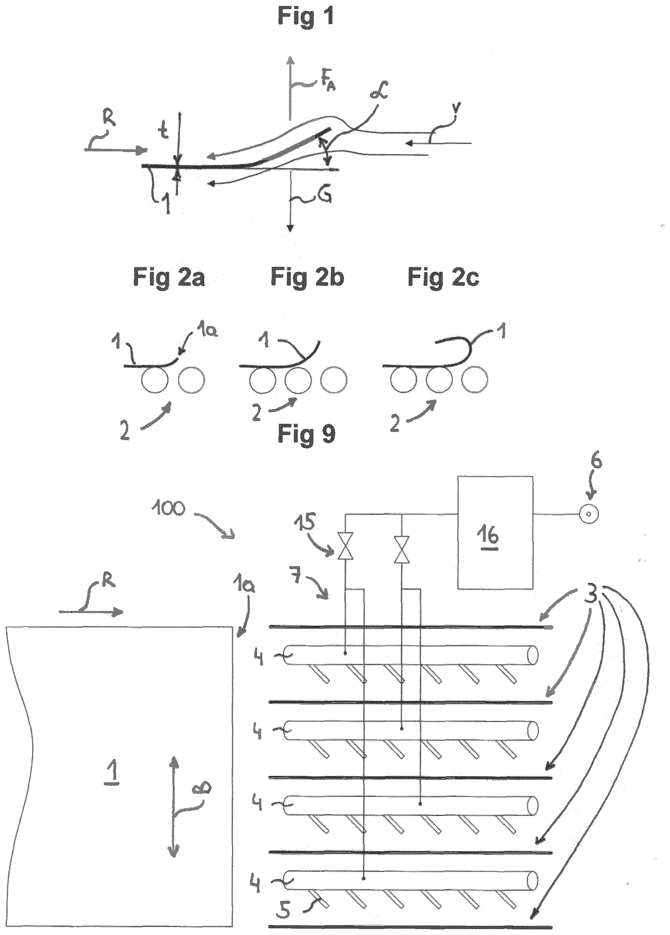

Im Endlos Betrieb werden die Bandköpfe nach dem Schnitt über Rollgänge zu einer der beiden Haspelanlagen, optional auch zu einer dritten Haspelanlage, transportiert, wo das Aufwickeln stattfindet. Dabei durchlaufen die Bandköpfe auch die Haspeltreiber. Da die Bänder im unteren Dickenbereich (bis zu 0,6 mm) nur eine sehr geringe Steifigkeit aufweisen, können die Bandköpfe bei der Vorwärtsbewegung beim plötzlichen Kontaktstoß mit den Transportrollen nach oben gebogen werden. Ab diesem Zeitpunkt treten zufolge der geänderten Anström- und Druckverhältnisse zwischen der Ober- und Unterseite des Bandkopfes starke Auftriebskräfte auf, die von der Anströmgeschwindigkeit und dem Winkel zwischen dem Bandkopf und der Horizontalen abhängen. Den Auftriebskräften wirkt die Gewichtskraft des aufgebogenen Bandabschnittes entgegen (siehe Fig 1). Ist die Auftriebskraft größer als die Gewichtskraft, so hebt der Bandkopf vom Rollgang ab. Die Bewegung des Bandes wird instabil, das Band beginnt zu "fliegen" und klappt gegebenenfalls zurück (siehe Fig 2a bis 2c). Diese Vorfälle führen zu einem Qualitätsverlust der Bänder und können auch zu einem sogenannten "*Cobble*" mit Anlagenstillstand führen.

### Stand der Technik

Die JP 08 174 031 A und JP 08 174 033 A beschreiben die Unterdrückung des Aufbiegens von Bandköpfen im Auslauf einer Fertigwalzstraße durch mehrere hintereinander angeordnete Luftbalken mit jeweils mehreren Luftdüsen. Durch vorgeschaltete Abstandssensoren wird die Höhe der Bandverformung gemessen und basierend auf den Messwerten die auf das Band aufgebrachte Luftmenge bzw. -druck eingestellt.

Durch das Messen und das anschließende Einstellen der Druckluft sind diese Vorrichtungen für hohe Bandgeschwindigkeiten nicht geeignet.

Die JP 3 275997 B2 beschreibt einen endlos arbeitenden Auslauf- und Haspelbereich. Vor der Haspeleinrichtung befindet sich eine Schere, die das endlos geförderte Band zerteilt. Zur Vermeidung von Bandlaufinstabilitäten (Aufbiegen, Fliegen...) werden Führungselemente in Richtung Band abgesenkt aus denen Luft quer zur Bandlaufrichtung mit hoher Geschwindigkeit austritt. Dadurch entsteht eine Druckdifferenz zwischen der Ober- und Unterseite des Bands, die ein leichtes Ansaugen bewirkt und dadurch den Bandlauf im Kopfbereich stabilisiert.

Die KR 2013 04 66 00 A beschreibt eine Vorrichtung zur Vermeidung des Abhebens eines Bandkopfes durch eine Vielzahl von oben liegender Ventilatoren, die Luft über Düsenbleche in Bandrichtung blasen. Zwischen den Düsenblechen sind kleine, drehbar gelagerte, Rollen angeordnet, die im Falle eines aufsteigenden Bandkopfes eine Kollision verhindern sollen. Diese Lösung hat folgende Nachteile:
- Die Ventilatoren erzeugen hohe Luftströme mit geringem Überdruck und benötigen daher einen großen Einbauraum sowie große Leitungsquerschnitte von den Ventilatoren zum Band. Es sind große und schwere Apparaturen erforderlich, die zu Wartungszwecken gehoben oder idealerweise aufgeklappt werden müssen.
- Die oben angeordneten und drehbar gelagerten Rollen bieten in vielen Fällen keinen geeigneten Kollisionsschutz gegen aufsteigende Bandköpfe, und vor allem keinen sicheren Betrieb der Anlage. Je nach Berührwinkel und Berührort des Bandkopfes mit der Apparatur können dennoch Schäden oder *Cobbles* mit Anlagenstopps verursacht werden.

Wie die schnelle Bewegung eines dünnen Bands auf einem Rollgang durch Luft-Blaseinrichtungen zuverlässig stabilisiert werden kann, ohne das Band dabei unzulässig stark abzukühlen bzw. das Gefüge zu verändern, und wie selbst bei einem Ausfall von Druckluft das Band ausreichend stabilisiert werden kann ohne die Blaseinrichtungen zu beschädigen, geht aus dem Stand der Technik nicht hervor.

Aus der KR 2012 0044180 A ist eine Vorrichtung zur Stabilisierung eines gewalzten metallischen Bandes auf einem Rollgang in einem Warmwalzwerk bekannt. Die Vorrichtung umfasst auf der Oberseite des Bandes mehrere Düsenreihen mit jeweils mehreren Düsen, die von einer Fluidversorgung mit einem Fluid zur Stabilisierung der Bewegung des Bands auf dem Rollgang versorgt werden können.

### Zusammenfassung der Erfindung

Die Aufgabe der Erfindung ist es, die Nachteile des Stands der Technik zu überwinden und eine Vorrichtung und ein Verfahren zur Stabilisierung der Bewegung eines gewalzten metallischen Bandes auf einem Rollgang anzugeben, mit denen ein schnelles, dünnes, metallisches Band
- auf dem Rollgang stabilisiert wird,
- dabei jedoch nur geringfügig abgekühlt wird, und
- die Stabilisierung selbst bei einem Ausfall der Druckluftversorgung ausreichend ist und die Vorrichtung gegen Beschädigungen geschützt wird.

Diese Aufgabe wird durch eine Vorrichtung nach Anspruch 1 gelöst. Vorteilhafte Ausführungsformen sind Gegenstand der abhängigen Ansprüche.

Die erfindungsgemäße Vorrichtung umfasst mehrere, jeweils im Wesentlichen in Bandlaufrichtung ausgerichtete, Schutzkufen zur Führung eines "fliegenden" Bandes. Die Schutzkufen sind oberhalb des Rollgangs angeordnet und weisen zueinander einen Abstand in der Breitenrichtung des Bandes auf. Vorzugsweise sind die Schutzkufen am eingangsseitigen Ende der Vorrichtung abgerundet, sodass das Band sicher in die Vorrichtung eingeführt wird. Zwischen den Schutzkufen sind in Bandlaufrichtung oder quer zur Bandlaufrichtung mehrere Düsenreihen mit jeweils mehreren Düsen angeordnet. Die Düsen sind gegenüber der Unterseite der Schutzkufen zurückgesetzt, sodass ein aufgewölbtes Band die Düsen nicht berühren bzw. zerstören kann. Eine Druckluftversorgung und ein Netz von Schlauch- oder Rohrleitungen versorgt die Düsenreihen mit Druckluft, sodass die Düsen Druckluft auf die Oberseite des Bandes aufbringen können.

Zur Stabilisierung eines dünnen Bands auf einem Rollgang weist die erfindungsgemäße Vorrichtung entweder
- mehrere, in der Breitenrichtung (d.h. quer zur Bandlaufrichtung) des Bandes ausgerichtete, Düsenreihen auf, die zueinander einen Abstand in Bandlaufrichtung aufweisen, oder
- mehrere, in Bandlaufrichtung ausgerichtete, Düsenreihen auf, die zueinander einen Abstand in der Breitenrichtung des Bandes aufweisen.

Für eine ausreichende Führung des Bandes ist es vorteilhaft, wenn die Vorrichtung zumindest drei, fünf oder sieben etc. Schutzkufen aufweist.

Um das Band in dessen Breitenrichtung gleichmäßig mit Druckluft zu beaufschlagen, ist es zweckmäßig, wenn in einer Düsenreihe zumindest eine Düse zwischen zwei Schutzkufen angeordnet ist.

Die Vorrichtung kann einfach und robust verrohrt werden, wenn die Düsen einer Düsenreihe über eine gemeinsame Schlauch- oder Rohrleitung mit Druckluft versorgt werden.

Aus Gründen der Zugänglichkeit und der Wartung ist es vorteilhaft, wenn die Vorrichtung über ein, vorzugsweise in Bandlaufrichtung ausgerichtetes, Gelenk und einen Schwenkantrieb zum Band hin und vom Band weg geschwenkt werden kann.

Insbesondere hinsichtlich der Lautstärke der Luftstromgeräusche durch die Düsen hat es sich als günstig herausgestellt, wenn eine Düse als Ein- oder Mehrlochdüse, und/oder als Rund- oder Flachstrahldüse, bevorzugt aber als eine Mehrkanal-Flachstrahldüse, ausgebildet ist.

Insbesondere bei wechselnden Bandbreiten ist es zweckmäßig, wenn die Ausrichtung einer Düse, bevorzugt mehrerer Düsen, besonders bevorzugt zumindest einer Düsenreihe, in der Bandlaufrichtung und/oder der Breitenrichtung des Bands einstellbar ist.

Besonders vorteilhaft ist es, wenn ein, mehrere oder alle Düsen einer Düsenreihe abschaltbar ausgebildet sind. Das Abschalten kann bspw. durch ein Schaltventil oder einen Kugelhahn erfolgen. Zweckmäßigerweise werden zwei Düsen, die symmetrisch zur Bandlängsachse angeordnet sind, abgeschaltet. Durch das Abschalten wird der Druckluftverbrauch und die Lautstärke bei schmäleren Bändern reduziert.

Günstig ist es, wenn die Ausrichtung ein oder mehrerer Düsenreihen gegenüber dem Band durch einen Aktuator, wie einem Pneumatik- oder Hydraulikzylinder, einstellbar ist. Dadurch kann die Ausrichtung der Düsen während des Betriebs automatisiert eingestellt werden.

Da die Stabilisierung eines Bandes auf einem Rollgang durch eine erfindungsgemäße Vorrichtung einerseits viel Druckluft benötigt und anderseits ein übermäßiges Abkühlen des Bands durch Druckluft vermieden werden soll, ist es vorteilhaft, wenn ein Druck der Druckluft durch die Druckluftversorgung und/oder durch ein Ventil, das zwischen der Druckluftversorgung und einer Düse angeordnet ist, eingestellt werden kann.

Vorzugsweise erfolgt die Einstellung der Druckluftmenge bzw. des Drucks der Druckluft in einer Schlauch- oder Rohrleitung durch eine Druck- oder Durchflussregelung.

Um Verbrauchsspitzen auch mit kleineren Druckluftversorgungen abdecken zu können, ist es vorteilhaft, wenn zwischen der Druckluftversorgung und einer Schlauch- oder Rohrleitung zumindest ein Druckluftspeicher und ein Ventil installiert sind, sodass der Druckluftspeicher Verbrauchsspitzen überbrücken, das Ventil den Durchfluss von Druckluft freigeben und absperren und die Abgabe von Druckluft hinsichtlich des Drucks oder der Menge gesteuert oder geregelt erfolgen kann.

Der Druckluftspeicher wird zuerst durch die Druckluftversorgung aufgefüllt, wobei ein Ventil, das zwischen dem Ausgang des Druckluftspeichers und einer Düse angeordnet ist, geschlossen ist. Zur Stabilisierung des Bandes wird das Ventil geöffnet, wodurch Druckluft aus dem Druckluftspeicher entnommen wird. Nach dem Beenden der Stabilisierung wird das Ventil wieder geschlossen und der Druckluftspeicher erneut aufgeladen.

Zweckmäßig ist es, wenn die erfindungsgemäße Vorrichtung in einem Warmwalzwerk zwischen einer der Kühlstrecke nachgeordneten Schere und einer Haspeleinrichtung, oder zwischen zwei Haspeleinrichtungen angeordnet ist.

Die erfindungsgemäß Aufgabe wird ebenfalls durch ein Verfahren zur Stabilisierung eines Bandlaufs eines gewalzten Stahlbands auf einem Rollgang in einem Warmwalzwerk nach Anspruch 14 gelöst.

Das Stahlband weist dabei eine Dicke ≤ 1,2 mm, vorzugsweise ≤ 0,9 mm, besonders bevorzugt ≤ 0,7 mm auf, und bewegt sich mit einer Geschwindigkeit ≥ 5 m/s, bevorzugt ≥ 10 m/s, besonders bevorzugt ≥ 15 m/s auf einem Rollgang.

Beim erfindungsgemäßen Verfahren werden folgende Schritte durchgeführt:
- Heranführen (z.B. Einschwenken oder Absenken) der erfindungsgemäßen Vorrichtung, wodurch die Vorrichtung an die Oberseite des Bands herangeführt wird;
- Aufbringen von Druckluft mit einem Druck p auf die Oberseite des Bands mittels der Düsen der Vorrichtung, wodurch die Bewegung des Bands auf dem Rollgang stabilisiert wird;
- Beenden des Aufbringens von Druckluft; und
- Wegführen (z.B. durch Aufschwenken oder Anheben) der Vorrichtung, sodass die Vorrichtung von der Oberseite des Bands weggeführt wird.

Durch das Heranführen wird die Vorrichtung an die Oberseite des Bands herangeführt, ansonsten ist der Bereich nach der Schere (meist eine sog. "fliegende Schere") oder der Bereich zwischen zwei Haspeleinrichtungen frei zugänglich. Beim Aufbringen von Druckluft auf die Oberseite des Stahlbands wird anfangs begonnen, die Düsen mit Druckluft zu versorgen. Anschließend wird Druckluft mit einem Druck p den Düsen zugeführt. Dadurch wird die Bewegung des Stahlbands stabilisiert. Schließlich wird das Aufbringen von Druckluft beendet und die Vorrichtung vom Band Weggeführt.

Zweckmäßig ist es, wenn vor dem Aufbringen von Druckluft ein Ventil, das zwischen einem Druckluftspeicher und einer Düse der Vorrichtung angeordnet ist, geschlossen wird, und anschließend der Druckluftspeicher auf einen Druck > p aufgefüllt wird.

Während des Aufbringens von Druckluft auf die Oberseite des Stahlbands ist es zweckmäßig, wenn ein Ventil, das zwischen einem Druckluftspeicher und einer Düse der Vorrichtung angeordnet ist, zumindest teilweise geöffnet wird. Dadurch kann die Druckluft mit einem Druck p zur Düse strömen. Vorzugsweise wird das Ventil entweder durchflussgeregelt oder druckgeregelt angesteuert.

### Kurze Beschreibung der Zeichnungen

Weitere Vorteile und Merkmale der vorliegenden Erfindung ergeben sich aus der nachfolgenden Beschreibung nicht einschränkender Ausführungsbeispiele, wobei die folgenden Figuren zeigen:
Fig 1 eine Darstellung der Auftriebskräfte F_{A} aufgrund der Bewegung eines aufgebogenen Bandes 1 auf einem Rollgang 2
Fig 2a...2c eine Darstellung einer instabilen Bewegung eines Bandes 1
Fig 3 eine perspektivische Darstellung einer erfindungsgemäßen Vorrichtung 100
Fig 4 ein Schema zur Verstellung des Sprühwinkels von Düsenreihen mittels eines Aktuators 11
Fig 5 eine Vorderansicht mehrerer erfindungsgemäßer Vorrichtungen 100 in einem Warmwalzwerk
Fig 6a, 6b, 6c eine Vorderansicht, eine Draufsicht und eine Seitenansicht einer erfindungsgemäßen Vorrichtung 100 im eingeschwenkten Zustand
Fig 7 und 8 eine Vorderansicht und eine Seitenansicht einer erfindungsgemäßen Vorrichtung 100 im aufgeschwenkten Zustand
Fig 9 eine schematische Darstellung einer erfindungsgemäßen Vorrichtung mit abschaltbaren Düsenreihen 4
Fig 10 eine schematische Darstellung einer Düse 5, deren Sprührichtung und Sprühstrahl 18 einstellbar sind
Fig 11a-11c eine schematische Darstellung der Verfahrensschritte bei Stabilisierung eines dünnen Bandes 1 in einem Warmwalzwerk

### Beschreibung der Ausführungsformen

Die Fig 1 zeigt schematisch die auf ein Band 1 einwirkenden Kräfte F_{A} und G, wenn das Band 1 über einen Rollgang 2 bewegt wird. Die Auftriebskraft F_{A} ist proportional zum Quadrat der Geschwindigkeit v und abhängig vom Winkel α zwischen dem Bandkopf 1a und der Horizontalen . Die Gewichtskraft G hingegen ist proportional zur Banddicke t. Übersteigt die Auftriebskraft F_{A} die Gewichtskraft G, so erfährt das Band 1 eine resultierende Kraft *F* **=** *F_{A} **-** G* nach oben, die das Band 1 nach oben bewegt. Wird die Bewegung nicht gestoppt, beginnt das Band "zu fliegen", d.h. es hebt vom Rollgang 2 ab, oder der Bandkopf 1a wird durch die Strömungskräfte umgebogen. Die Strömungslinien der Luft sind in Fig 1 schematisch durch Pfeile dargestellt. Die unterschiedlichen Phasen beim Umbiegen eines Bandkopfs sind in den Fig 2a bis 2c gezeigt.

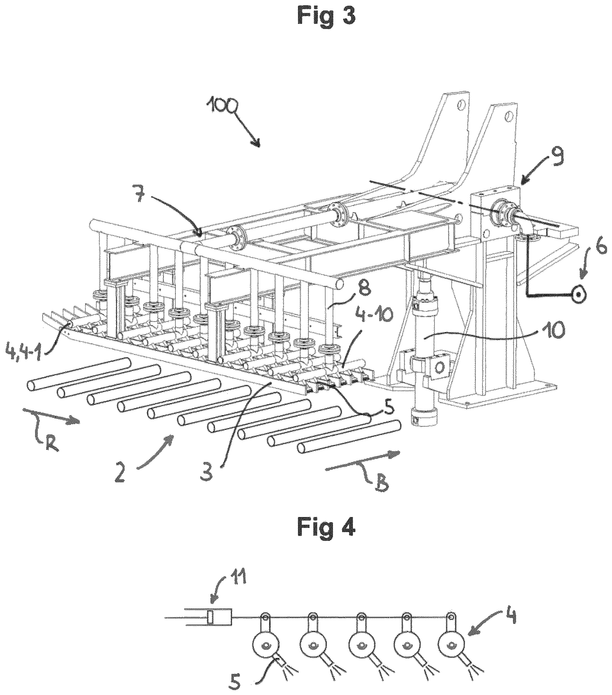

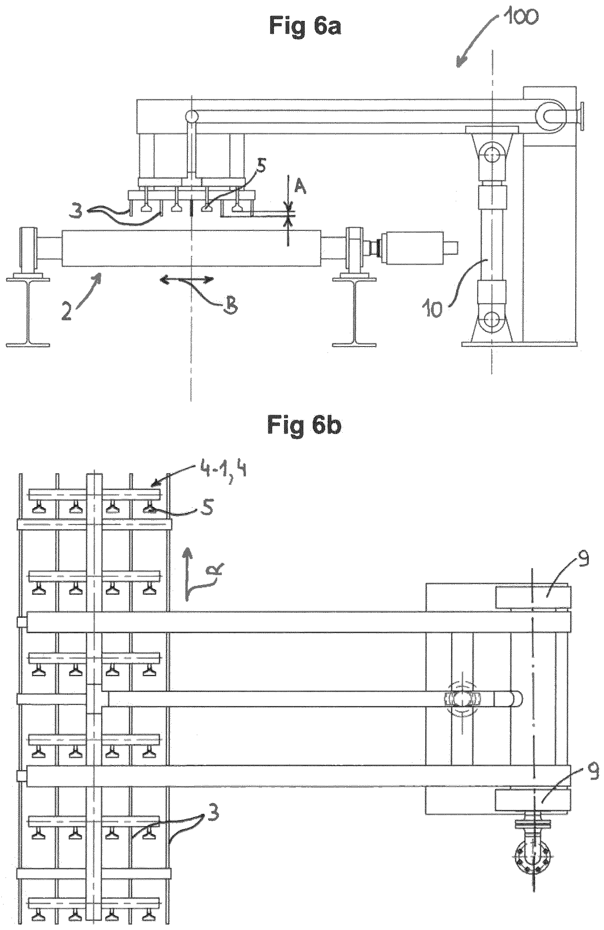

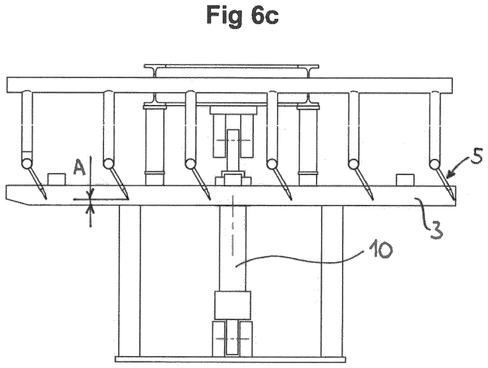

In Fig 3 ist eine erfindungsgemäße Vorrichtung 100 zur Stabilisierung eines gewalzten metallischen Bandes auf einem Rollgang 2 dargestellt. Die Vorrichtung umfasst sieben in Bandlaufrichtung R angeordnete Schutzkufen 3 zur Führung eines nicht dargestellten Stahlbandes, wobei die Schutzkufen 3 in Breitenrichtung B einen Abstand zueinander aufweisen. Im Betrieb wird das Stahlband in Bandlaufrichtung R mit einer Geschwindigkeit zwischen der Unterseite der Schutzkufen 3 und dem Rollgang 2 bewegt. In Bandlaufrichtung R weist die Vorrichtung 100 zehn Düsenreihen 4-1 bis 4-10 auf, wobei jede Düsenreihe mehrere in Breitenrichtung B angeordnete Düsen 5 aufweist. Um die Düsen 5 vor Beschädigungen zu schützen, sind die Düsen 5 gegenüber der Unterseite der Schutzkufen 3 um den Abstand A (siehe Fig 6a und 6c) zurückgesetzt eingebaut. Somit kann selbst ein wie in den Fig 2a bis 2c dargestellter aufgewölbter Bandkopf die Düsen nicht beschädigen. Konkret sind die Düsen 5 als Flachstrahldüsen ausgebildet, wodurch die Lautstärke der Luftstromgeräusche im Betrieb reduziert wird und die Oberseite des Bands 1 in Breitenrichtung B gleichmäßig mit Druckluft beaufschlagt wird. Um die Vorrichtung 100 zum Band hin und vom Band weg bewegen zu können, ist ein Schwenkantrieb 10 und ein Gelenk 9 vorgesehen. Im eingefahrenen Zustand des Schwenkantriebs 10 kann das Band mit Druckluft stabilisiert werden. Im ausgefahrenen Zustand des Schwenkantriebs 10 ist das Band frei zugänglich, was insbesondere bei Wartungsarbeiten günstig ist. Die Druckluft zur Stabilisierung des Bands wird über eine Druckluftversorgung 6 zu einer beim Gelenk 9 angeordneten Drehdurchführung, weiter über ein Netz von Rohrleitungen 7 und gemeinsame Rohrleitungen 8 zu den Düsen 5 der einzelnen Düsenreihen 4-1 bis 4-10 geführt. Die Druckluftversorgung 6 kann ein bereits beim Warmwalzwerk vorhandenes Druckluftnetz sein oder eine separate Kompressorstation zur Versorgung einer oder mehrerer Vorrichtungen 100 mit Druckluft.

In Fig 4 ist das Verstellen von Düsenreihen 4 mittels eines Aktuators 11 dargestellt. Die Düsenreihen 4 sind drehbar aufgehängt (symbolisch durch eine Lagerschale in der Mitte der Düsenreihen dargestellt), sodass der Sprühwinkel der Düsen 5 während des Betriebs eingestellt werden kann.

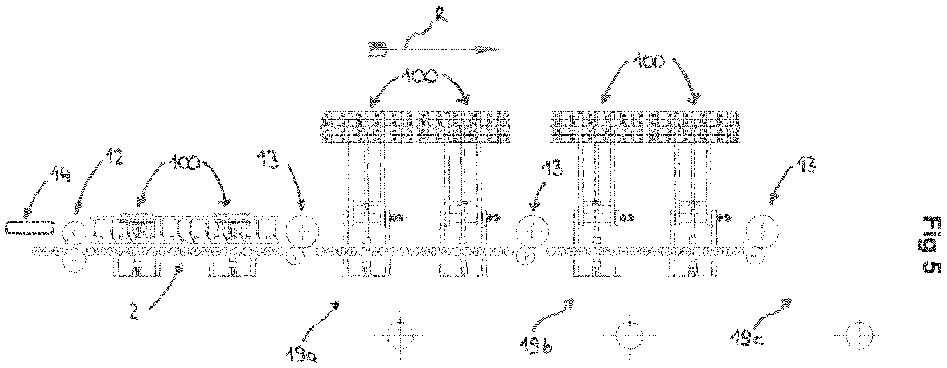

Die Fig 5 zeigt eine Anordnung mehrerer erfindungsgemäßer Vorrichtungen 100 in einem Warmwalzwerk. Nach einer Kühlstrecke 14 ist eine Schere 12 angeordnet, die ein hier nicht dargestelltes Band trennen kann. Bei einer Arvedi ESP Gieß-Walz-Verbundanlage liegt das Band bis zum Trennen durch die Schere 12 endlos vor. Erst durch das Trennen entsteht ein Bandkopf (siehe Bezugszeichen 1a in Fig 2a). Hier soll zur Illustration angenommen werden, dass das Band anfangs auf der ersten Haspeleinrichtung 19a aufgewickelt wird und anschließend das Band auf der zweiten Haspeleinrichtung 19b aufgewickelt werden soll. Vor dem Trennen des Bandes mittels der Schere 12 werden zusätzlich zu den beiden Vorrichtungen 100 zwischen der Schwere 12 und der Haspeleinrichtung 19a die beiden in Bandlaufrichtung R nachfolgenden Vorrichtungen 100 zum Band eingeschwenkt und die Düsen mit Druckluft versorgt. Durch das Trennen des Bands entsteht ein Bandkopf der durch die vier eingeschwenkten Vorrichtungen 100 auf dem Rollgang 2 zur Haspeleinrichtung 19b geführt wird. Nach dem Beginn des Aufhaspeln des Bands durch die Haspeleinrichtung 19b können die Vorrichtungen 100 wieder aufgeschwenkt werden, da das Band durch den Bandzug beim Aufhaspeln stabilisiert wird.

Die Fig 6a bis 6c zeigen drei Ansichten einer erfindungsgemäßen Vorrichtung 100, die über einen Schwenkantrieb 10 (hier ein Hydraulik- oder Pneumatikzylinder) von einem nicht dargestellten Band weggeschwenkt werden kann. Die Düsen 5 weisen - wie in Fig 6a dargestellt - einen Abstand A zur Unterseite der Schutzkufen 3 auf, sodass diese nicht vom Band beschädigt werden können. Der in Fig 6a dargestellte Rollgang mit einer angetriebenen Rolle ist in den Fig 6b und 6c aus Gründen der Übersichtlichkeit nicht dargestellt.

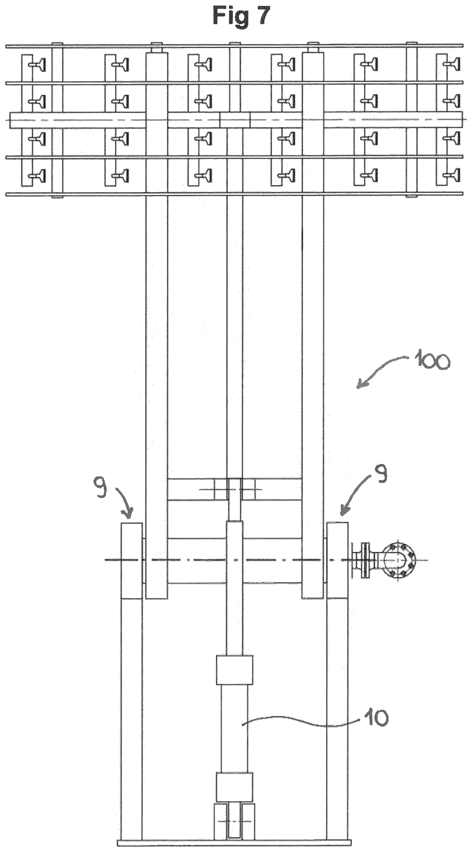

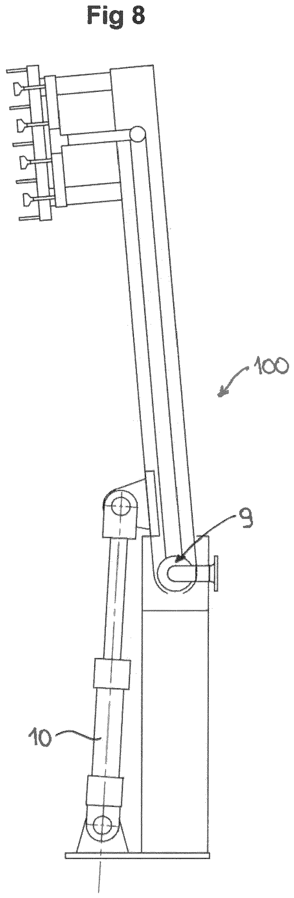

In den Fig 7 und 8 ist die Vorrichtung 100 im aufgeklappten bzw. aufgeschwenkten Zustand dargestellt.

Die Fig 9 zeigt eine erfindungsgemäße Vorrichtung 100, deren Düsenreihen 4 und Schutzkufen 3 in Bandlaufrichtung R angeordnet sind. Die äußeren und die inneren Düsenreihen 4 sind über Ventile (hier Schaltventile) 15 symmetrisch zur Bandmitte abschaltbar. Somit kann der Druckluftverbrauch bei schmäleren Bändern reduziert werden.

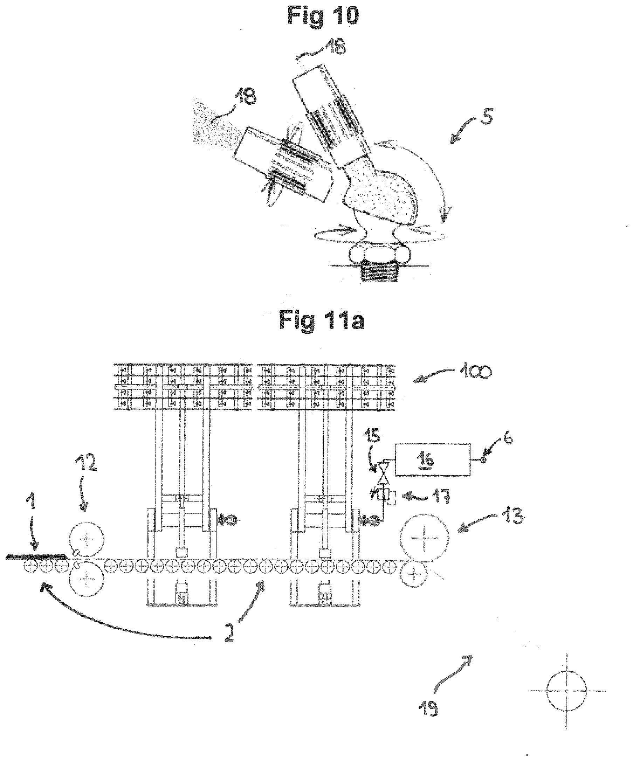

Die Fig 10 zeigt schematische eine Darstellung einer Düse 5, deren Sprührichtung mittels eines Kugelkopfes und dessen Sprühstrahl 18 durch Verdrehen des Düsenkopfes einstellbar sind. Die Düse 5 ist lösbar mittels eines Gewindes in eine Rohrleitung eingeschraubt. Somit kann die Düse 5 bei Verstopfung oder Abnutzung einfach ausgewechselt werden.

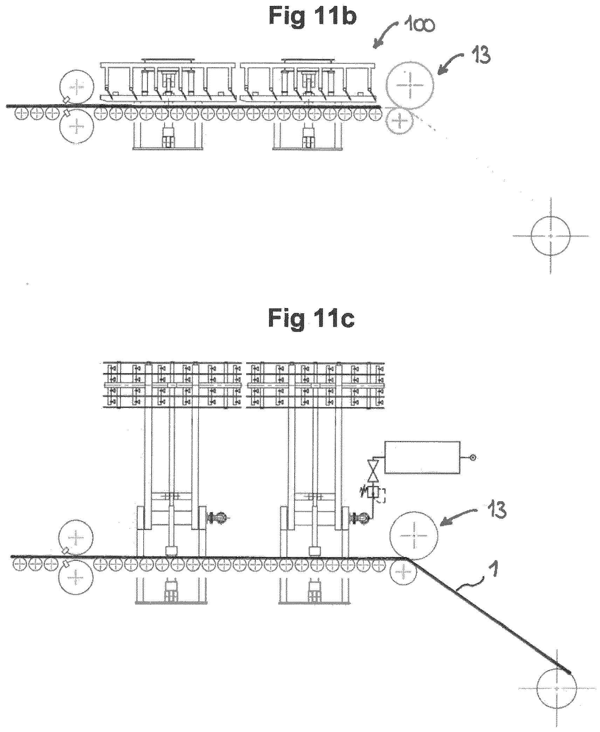

In den Fig 11a bis 11c sind die Verfahrensschritte des erfindungsgemäßen Verfahrens dargestellt. In Fig 11a bewegt sich ein gewalztes Band 1 aus Stahl mit einer Dicke von 0,8 mm und einer Geschwindigkeit von 16 m/s auf einem Rollgang 2 auf eine Schere 12 zu. Ein Druckluftspeicher 16 wird durch eine Druckluftversorgung 6 auf einen Druck von 6 bar aufgeladen. Dabei ist das Ventil 15 geschlossen und die beiden Vorrichtungen 100 befinden sich im aufgeschwenkten Zustand. Anschließend werden die Vorrichtungen 100 zum Rollgang 2 eingeschwenkt (siehe Fig 11b) und das Ventil 15 wird geöffnet, sodass Druckluft aus dem Druckluftspeicher 16 zu den Düsen 5 der Vorrichtungen 100 strömen kann. Durch das Druckregelventil 17 wird die der Druck der Druckluft in den Rohrleitungen auf konstant 4 bar gehalten eingestellt und auf die Oberseite des Bandes 1 aufgebracht. Durch die Druckluft wird das Band 1 auf dem Rollgang 2 stabilisiert, sodass es aufgrund der Strömungskräfte nicht zu "fliegen" beginnt. Nachdem das Band 1 von den Haspeltreibern 13 zur Haspeleinrichtung 19a umgelenkt wurde und mit dem Aufhaspeln begonnen wurde, wird das Ventil 15 wieder geschlossen und dadurch das Aufbringen von Druckluft auf das Band beendet. Anschließend werden die Vorrichtungen 100 wieder aufgeklappt. Sodann wird der Druckluftspeicher 16 wieder aufgeladen und die Vorrichtungen für die nächste Sequenz vorbereitet. Der Druck der Druckluft ist über die Druckregelventile 17 mechanisch einstellbar. Alternativ können aber auch elektrisch einstellbare Druckregelventile oder druckbeaufschlagte Druckregelventile verwendet werden. Die Druckluft kann auch über eine Durchflussregelung durchflussgeregelt aufgebracht werden.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den durch die Ansprüche definierten Schutzumfang der Erfindung zu verlassen.

### Bezugszeichenliste

- 1: Band
- 1a: Bandkopf
- 2: Rollgang
- 3: Schutzkufe
- 4, 4-1...4-10: Düsenreihe
- 5: Düse
- 6: Druckluftversorgung
- 7: Netz von Rohrleitungen
- 8: Gemeinsame Rohrleitung
- 9: Gelenk
- 10: Schwenkantrieb
- 11: Aktuator
- 12: Schere
- 13: Haspeltreiber
- 14: Kühlstrecke
- 15: Ventil
- 16: Druckluftspeicher
- 17: Druckregler
- 18: Sprühstrahl
- 19: Haspeleinrichtung
- 100: Vorrichtung zur Stabilisierung

- A: Abstand
- B: Breitenrichtung des Bands
- F_{A}: Auftriebskraft
- G: Gewichtskraft
- R: Bandlaufrichtung
- t: Banddicke
- v: Geschwindigkeit

- α: Winkel

## Patentansprüche

1. Vorrichtung (100) zur Stabilisierung eines gewalzten metallischen Bandes (1), vorzugsweise Stahlbands, auf einem Rollgang (2) in einem Warmwalzwerk, wobei das Band (1) eine Ober- und Unterseite aufweist und in einer Bandlaufrichtung (R) auf dem Rollgang (2) bewegt wird, umfassend: - einen Rollgang (2);
- mehrere in Bandlaufrichtung (R) oder in der Breitenrichtung (B) des Bands angeordnete Düsenreihen (4, 4-1 bis 4-10), wobei jede Düsenreihe (4) mehrere Düsen (5) aufweist; und
- eine Druckluftversorgung (6) und ein Netz von Schlauch- oder Rohrleitungen (7) zur Versorgung der Düsen (5) mit Druckluft, wobei die Düsen (5) Druckluft auf die Oberseite des Bandes (1) zur Stabilisierung der Bewegung des Bands (1) auf dem Rollgang (2) aufbringen können, **gekennzeichnet durch**
- mehrere, jeweils in Bandlaufrichtung (R) ausgerichtete, Schutzkufen (3) zur Führung des Bandes (1), wobei die Schutzkufen (3) oberhalb des Rollgangs (2) angeordnet sind und die Schutzkufen (3) zueinander einen Abstand in einer Breitenrichtung (B) des Bands (1) aufweisen,
- wobei die Düsen (5) gegenüber einer Unterseite der Schutzkufen (3) zurückgesetzt sind, sodass ein aufgewölbtes Band (1) die Düsen (5) nicht berühren kann.

2. Vorrichtung nach Anspruch 1, **dadurch gekennzeichnet, dass** die Vorrichtung zumindest drei Schutzkufen (3) aufweist.

3. Vorrichtung nach einem der vorhergehenden Ansprüche, **dadurch gekennzeichnet, dass** in einer Düsenreihe (4) wenigstens eine Düse (5) zwischen zwei Schutzkufen (3) angeordnet ist.

4. Vorrichtung nach einem der vorhergehenden Ansprüche, **dadurch gekennzeichnet, dass** die Düsen (5) einer Düsenreihe (4) über eine gemeinsame Schlauch- oder Rohrleitung (8) mit Druckluft versorgt werden.

5. Vorrichtung nach einem der vorhergehenden Ansprüche, **dadurch gekennzeichnet, dass** die Vorrichtung durch ein Gelenk (9) und einen Schwenkantrieb (10) zum Band (1) hin und vom Band (1) weg geschwenkt werden kann.

6. Vorrichtung nach einem der vorhergehenden Ansprüche, **dadurch gekennzeichnet, dass** eine Düse (5) als Ein- oder Mehrlochdüse, und/oder als eine Rund- oder Flachstrahldüse, bevorzugt als Mehrkanal-Flachstrahldüse, ausgebildet ist.

7. Vorrichtung nach einem der vorhergehenden Ansprüche, **dadurch gekennzeichnet, dass** die Ausrichtung einer Düse (5), bevorzugt mehrerer Düsen (5), besonders bevorzugt einer Düsenreihe, gegenüber dem Band (1) einstellbar ist.

8. Vorrichtung nach Anspruch 7, **dadurch gekennzeichnet, dass** die Ausrichtung ein oder mehrerer Düsenreihen (4) gegenüber dem Band (1) durch einen Aktuator (11), wie einem Pneumatik- oder Hydraulikzylinder, einstellbar ist.

9. Vorrichtung nach einem der vorhergehenden Ansprüche, **dadurch gekennzeichnet, dass** ein oder mehrere Düsen einer Düsenreihe, bevorzugt durch ein Schaltventil oder einen Kugelhahn, abschaltbar sind.

10. Vorrichtung nach einem der vorhergehenden Ansprüche, **dadurch gekennzeichnet, dass** ein Druck der Druckluft durch die Druckluftversorgung (6) und/oder durch ein Ventil (15), das zwischen der Druckluftversorgung (6) und einer Düse (5) angeordnet ist, eingestellt werden kann.

11. Vorrichtung nach Anspruch 10, **dadurch gekennzeichnet, dass** die Druckluft in einer Schlauch- oder Rohrleitung durch einen Druck- oder Durchflussregler eingestellt wird.

12. Vorrichtung nach einem der vorhergehenden Ansprüche, **dadurch gekennzeichnet, dass** zwischen der Druckluftversorgung (6) und einer Schlauch- oder Rohrleitung zumindest ein Druckluftspeicher (16) und ein Ventil (15) installiert sind, wobei durch den Druckluftspeicher (16) Verbrauchsspitzen überbrückt werden und das Ventil (15) den Durchfluss von Druckluft aus dem Druckluftspeicher (16) freigeben und absperren kann.

13. Warmwalzwerk mit einer Vorrichtung nach einem der vorhergehenden Ansprüche, **dadurch gekennzeichnet, dass** die Vorrichtung (100) zwischen einer einer Kühlstrecke (14) nachgeordneten Schere (12) und einer Haspeleinrichtung (19, 19a, 19b, 19c) oder zwischen zwei Haspeleinrichtungen (19a, 19b, 19c) angeordnet ist.

14. Verfahren zur Stabilisierung eines Bandlaufs eines gewalzten Bandes (1), bevorzugt Stahlbands, auf einem Rollgang (2) in einem Warmwalzwerk, wobei das Band (1) eine Dicke t ≤ 1,2 mm, vorzugsweise ≤ 0,9 mm, besonders bevorzugt ≤ 0,7 mm aufweist, und mit einer Geschwindigkeit ≥ 5 m/s, bevorzugt ≥ 10 m/s, besonders bevorzugt ≥ 15 m/s auf dem Rollgang (2) bewegt wird, umfassend die Schritte:
- Heranführen der Vorrichtung (100) nach einem der vorhergehenden Ansprüche, wodurch die Vorrichtung (100) an die Oberseite des Bands herangeführt (1) wird;
- Aufbringen von Druckluft mit einem Druck p auf die Oberseite des Bands (1) mittels der Düsen (5) der Vorrichtung (100), wodurch die Bewegung des Bands (1) auf dem Rollgang (2) stabilisiert wird;
- Beenden des Aufbringens von Druckluft;
- Wegführen der Vorrichtung (100), sodass die Vorrichtung (100) vom Band (1) weggeführt wird.

15. Verfahren nach Anspruch 14, **dadurch gekennzeichnet, dass** vor dem Aufbringen von Druckluft folgende Schritte durchgeführt werden:
- Schließen eines Ventils (15), das zwischen einem Druckluftspeicher (16) und einer Düse (5) der Vorrichtung (100) angeordnet ist; und
- Auffüllen des Druckluftspeichers (16) auf einen Druck > p.

16. Verfahren nach einem der Ansprüche 14 oder 15, **dadurch gekennzeichnet, dass** beim Aufbringen von Druckluft ein Ventil (15), das zwischen einem Druckluftspeicher (16) und einer Düse (5) der Vorrichtung (100) angeordnet ist, zumindest teilweise geöffnet wird, wodurch die Druckluft zur Düse (5) strömt.

17. Verfahren nach Anspruch 16, **dadurch gekennzeichnet, dass** das die Öffnung des Ventils (15) durchflussgeregelt oder druckgeregelt eingestellt wird.

18. Verfahren nach einem der Ansprüche 14 bis 17, **dadurch gekennzeichnet, dass** das Heranführen durch Einschwenken oder Absenken und/oder das Wegführen durch Wegschwenken oder Anheben erfolgt.

## Claims

1. Device (100) for stabilizing a rolled metal band (1), preferably a steel band, on a roller table (2) in a hot rolling mill, wherein the band (1) has an upper side and a lower side and is moved in a band run direction (R) on the roller table (2), comprising:
- a roller table;
- a plurality of nozzle rows (4, 4-1 to 4-10) which are arranged in the band run direction (R) or in the width direction (B) of the band, wherein each nozzle row (4) has a plurality of nozzles (5) and
- a compressed air supply (6) and a network of hose lines or pipe lines (7) for supplying the nozzles (5) with compressed air, wherein the nozzles (5) can apply compressed air to the upper side of the band (1) for stabilizing the movement of the band (1) on the roller table (2),
**characterized by**
- a plurality of protective runners (3), oriented in each case in the band run direction (R), for the guiding of the band (1), wherein the protective runners (3) are arranged above the roller table (2) and the protective runners (3) have a distance to each other in a width direction (B) of the band (1);
- wherein the nozzles (5) are set back in relation to an underside of the protective runners (3) so that an upwardly bent band (1) cannot contact the nozzles (5).

2. Device according to Claim 1, **characterized in that** the device has at least three protective runners (3).

3. Device according to one of the preceding claims, **characterized in that** in a nozzle row (4) at least one nozzle (5) is arranged between two protective runners (3).

4. Device according to one of the preceding claims, **characterized in that** the nozzles (5) of a nozzle row (4) are supplied with compressed air via a common hose line or pipe line (8).

5. Device according to one of the preceding claims, **characterized in that** the device can be pivoted toward the band (1) and away from the band (1) by means of a joint (9) and an articulated drive (10).

6. Device according to one of the preceding claims, **characterized in that** a nozzle (5) is designed as a single orifice or multi-orifice nozzle and/or as a round jet or flat jet nozzle, preferably as a multi-channel flat jet nozzle.

7. Device according to one of the preceding claims, **characterized in that** the orientation of a nozzle (5), preferably of a plurality of nozzles (5), especially preferably of a nozzle row, can be adjusted in relation to the band (1).

8. Device according to Claim 7, **characterized in that** the orientation of one or more nozzle rows (4) in relation to the band (1) can be adjusted by means of an actuator (11), such as a pneumatic or hydraulic cylinder.

9. Device according to one of the preceding claims, **characterized in that** one or more nozzles of a nozzle row can be shut off, preferably by means of a control valve or a ball cock.

10. Device according to one of the preceding claims, **characterized in that** a pressure of the compressed air can be adjusted by means of the compressed air supply (6) and/or by means of a valve (15) which is arranged between the compressed air supply (6) and a nozzle (5).

11. Device according to Claim 10, **characterized in that** the compressed air in a hose line or pipe line is adjusted by means of a pressure regulator or flow rate regulator.

12. Device according to one of the preceding claims, **characterized in that** at least one compressed air accumulator (16) and a valve (15) are installed between the compressed air supply (6) and a hose line or pipe line, wherein consumption peaks are covered by means of the compressed air accumulator (16) and the valve (15) can release and shut off the throughflow of compressed air from the compressed air accumulator (16).

13. Hot rolling mill with a device according to one of the preceding claims, **characterized in that** the device (100) is arranged between shears (12), which are arranged downstream of a cooling zone (14), and a winding device (19, 19a, 19b, 19c) or between two winding devices (19a, 19b, 19c).

14. Method for stabilizing a band run of a rolled band (1), preferably of a steel band, on a roller table (2) in hot rolling mill, wherein the band (1) has thickness of t ≤ 1.2 mm, preferably ≤ 0.9 mm, especially preferably ≤ 0.7 mm, and is moved on the roller table (2) at a speed of ≥ 5 m/s, preferably ≥ 10 m/s, especially preferably ≥ 15 m/s, comprising the steps:
- guiding on of the device (100) according to one of the preceding claims, whereby the device (100) is guided onto the upper side of the band (1);
- applying compressed air at a pressure p to the upper side of the band (1) by means of the nozzles (5) of the device (100), as a result of which the movement of the band (1) on the roller table (2) is stabilized;
- terminating the application of compressed air;
- guiding the device (100) away so that the device (100) is guided away from the band (1).

15. Method according to Claim 14, **characterized in that** before the application of compressed air the following steps are carried out:
- closing a valve (15) which is arranged between a compressed air accumulator (16) and a nozzle (5) of the device (100); and
- replenishing the compressed air accumulator (16) to a pressure > p.

16. Method according to either of Claims 14 and 15, **characterized in that** during the application of compressed air, a valve (15), which is arranged between a compressed air accumulator (16) and a nozzle (5) of the device (100), is at least partially opened, as a result of which the compressed air flows to the nozzle (5).

17. Method according to Claim 16, **characterized in that** the opening of the valve (15) is adjusted in a flow rate regulated or pressure regulated manner.

18. Method according to one of Claims 14 to 17, **characterized in that** the guiding in is carried out by means of inward pivoting or lowering and/or the guiding away is carried out by means of pivoting away or lifting.

## Revendications

1. Dispositif (100) de stabilisation d'une bande métallique laminée (1), de préférence un feuillard d'acier, sur un train de rouleaux (2) dans un laminoir à chaud, la bande (1) présentant une face supérieure et une face inférieure et étant déplacée sur le train de rouleaux (2) dans une direction de déplacement de bande (R), comprenant :
- un train de rouleaux (2) ;
- plusieurs rangées de buses (4, 4-1 à 4-10) agencées dans la direction de déplacement de bande (R) ou dans le sens de la largeur (B) de la bande, chaque rangée de buses (4) comportant plusieurs buses (5) ; et
- une alimentation d'air comprimé (6) et un réseau de tuyauteries souples ou rigides (7) destinés à l'alimentation des buses (5) en air comprimé, les buses (5) pouvant appliquer de l'air comprimé sur la face supérieure de la bande (1) pour stabiliser le mouvement de la bande (1) sur le train de rouleaux (2),
**caractérisé par**
- plusieurs patins de protection (3) permettant de guider la bande (1) orientés chacun dans la direction de déplacement de bande (R), les patins de protection (3) étant disposés au-dessus du train de rouleaux (2) et les patins de protection (3) présentant une distance les uns par rapport aux autres dans un sens de la largeur (B) de la bande (1),
- les buses (5) étant en retrait par rapport à un côté inférieur des patins de protection (3) de façon qu'une bande (1) bombée ne puisse pas toucher les buses (5).

2. Dispositif selon la revendication 1, **caractérisé en ce que** le dispositif comprend au moins trois patins de protection (3).

3. Dispositif selon l'une des revendications précédentes, **caractérisé en ce qu'**au moins une buse (5), dans une rangée de buses (4), est située entre deux patins de protection (3).

4. Dispositif selon l'une des revendications précédentes, **caractérisé en ce que** les buses (5) d'une rangée de buses (4) sont alimentées en air comprimé par une tuyauterie flexible ou rigide (8) commune.

5. Dispositif selon l'une des revendications précédentes, **caractérisé en ce que** le dispositif peut être pivoté de manière à s'approcher de la bande (1) et à s'éloigner de la bande (1) grâce à une articulation (9) et à un entraînement en pivotement (10).

6. Dispositif selon l'une des revendications précédentes, **caractérisé en ce qu'**une buse (5) est conçue en tant que buse monotrou ou multitrous et/ou en tant que buse à jet circulaire ou à jet plat, de préférence en tant que buse multicanaux à jet plat.

7. Dispositif selon l'une des revendications précédentes, **caractérisé en ce que** l'orientation d'une buse (5), de préférence de plusieurs buses (5), plus préférablement encore d'une rangée de buses, peut être réglée par rapport à la bande (1).

8. Dispositif selon la revendication 7, **caractérisé en ce que** l'orientation d'une ou de plusieurs rangées de buses (4) par rapport à la bande (1) peut être réglée au moyen d'un vérin (11), tel un vérin pneumatique ou un vérin hydraulique.

9. Dispositif selon l'une des revendications précédentes, **caractérisé en ce qu'**une ou plusieurs buses d'une rangée de buses peuvent être mises hors circuit, de préférence au moyen d'une soupape de commande ou d'un robinet à boisseau.

10. Dispositif selon l'une des revendications précédentes, **caractérisé en ce qu'**une pression de l'air comprimé peut être réglée au moyen de l'alimentation d'air comprimé (6) et/ou d'une soupape (15) qui est située entre l'alimentation d'air comprimé (6) et une buse (5).

11. Dispositif selon la revendication 10, **caractérisé en ce que** l'air comprimé dans une tuyauterie flexible ou rigide est réglé au moyen d'un régulateur de pression ou de débit.

12. Dispositif selon l'une des revendications précédentes, **caractérisé en ce qu'**au moins un accumulateur pneumatique (16) et une soupape (15) sont installés entre l'alimentation d'air comprimé (6) et une tuyauterie flexible ou rigide, l'accumulateur pneumatique (16) permettant de couvrir les pics de consommation et la soupape (15) pouvant libérer et arrêter l'écoulement d'air comprimé de l'accumulateur pneumatique (16).

13. Laminoir à chaud comprenant un dispositif selon l'une des revendications précédentes, **caractérisé en ce que** le dispositif (100) est disposé entre une cisaille (12) située après une voie de refroidissement (14) et un dévidoir (19, 19a, 19b, 19c) ou entre deux dévidoirs (19a, 19b, 19c).

14. Procédé de stabilisation d'un déroulement de bande d'une bande laminée (1), de préférence un feuillard d'acier, sur un train de rouleaux (2) dans un laminoir à chaud, la bande (1) ayant une épaisseur t ≤ 1,2 mm, de préférence ≤ 0,9 mm, plus préférablement encore ≤ 0,7 mm, et étant déplacée à une vitesse ≥ 5 m/s, de préférence ≥ 10 m/s, plus préférablement encore ≥ 15 m/s, sur le train de rouleaux (2), comprenant ces étapes :
- approche du dispositif (100) selon l'une des revendications précédentes, grâce à quoi le dispositif (100) est approché de la face supérieure de la bande (1) ;
- application d'air comprimé, à une pression p, sur la face supérieure de la bande (1) au moyen des buses (5) du dispositif (100), grâce à quoi le mouvement de la bande (1) sur le train de rouleaux (2) est stabilisé ;
- cessation de l'application d'air comprimé ;
- éloignement du dispositif (100), de façon que le dispositif (100) soit éloigné de la bande (1).

15. Procédé selon la revendication 14, **caractérisé en ce que** les étapes suivantes sont exécutées avant l'application d'air comprimé :
- fermeture d'une soupape (15) qui est située entre un accumulateur pneumatique (16) et une buse (5) du dispositif (100) ; et
- remplissage de l'accumulateur pneumatique (16) jusqu'à atteindre une pression > p.

16. Procédé selon l'une des revendications 14 ou 15, **caractérisé en ce que**, lors de l'application d'air comprimé, une soupape (15) qui est située entre un accumulateur pneumatique (16) et une buse (5) du dispositif (100) est ouverte, au moins en partie, grâce à quoi l'air comprimé s'écoule vers la buse (5).

17. Procédé selon la revendication 16, **caractérisé en ce que** l'ouverture de la soupape (15) est réglée par une régulation de débit ou une régulation de pression.

18. Procédé selon l'une des revendications 14 à 17, **caractérisé en ce que** l'approche se fait par pivotement ou abaissement et/ou l'éloignement se fait par pivotement ou élévation.
